# EUROPEAN PATENT SPECIFICATION

(11) **EP 1 458 987 B1**
(45) Date of publication and mention of the grant of the patent: **28.04.2010**
(21) Application number: 02793655.8
(22) Date of filing: 17.12.2002
(51) Int. Cl.: F16D 23/06

(54) **ASSEMBLY SYSTEM FOR SYNCHRONIZING DEVICES IN A GEARBOX**
MONTAGESYSTEM ZUR SYNCHRONISATION VON VORRICHTUNGEN IN EINEM GETRIEBE
SYSTEME DE MONTAGE POUR DISPOSITIFS DE SYNCHRONISATION DANS UNE BOITE DE VITESSES

(30) Priority: 17.12.2001 SE 0104244
(43) Date of publication of application: 22.09.2004
(73) Proprietor: Scania CV AB (publ), 151 87 Södertälje (SE)
(72) Inventor: NILSSON, Dag, S-151 32 Södertälje (SE); FREIJ, Magnus, S-613 36 Oxelösund (SE)
(86) International application number: PCT/SE2002/002342
(87) International publication number: WO 2003/058084

(56) References cited:
- DE-A1- 19 928 597
- SE-B- 448 182

## Description

### Technical field

The present invention relates to a structuring system for synchronising devices for a gearbox, of the kind indicated in the preamble of claim 1.

### State of the art

A synchronising device of the abovementioned kind incorporates a carrier which is arranged on, and for joint rotation with, a rotatable shaft and which not only has a hub portion but also a web portion which supports for joint rotation with it but in an axially movable manner a shift sleeve (synchronising sleeve), movement of which enables the carrier, and hence the shaft, to be coupled to a coupling element belonging to a gearbox gearwheel. This coupling element may take the form of a portion of the same gearbox gearwheel or be an element firmly connected to said gearwheel. The synchronising device further incorporates at least two synchronising rings with cooperating conical friction surfaces.

Synchronising devices of this kind are already known and comprise versions which may be designed to effect single, double or triple synchronisation.

The synchronising mechanism according to SE 448 182 and the synchronising device according to DE 199 28 597 A1 may be cited as examples of such known technology.

However, both of those specifications refer to devices of relatively complicated design which comprise a large number of constituent constructive elements of various kinds which do not enable rational construction of single, double and triple synchronisations using a limited number of standardised basic components which can easily be combined to form the synchronisation alternative intended in the particular case. A particular disadvantage of the synchronisation device according to said DE specification is that the axial overall length of the device will be troublesomely great. With regard to the synchronising device according to the abovementioned SE specification, it may be noted that it has a special reaction washer (plate) which connects the outer and inner synchronising rings (i.e. the latch cone and the inner cone) together in a torsional force-transmitting manner. This results in the whole synchronising torque being transmitted to the latch cone. The locking teeth of the latch cone can therefore be made relatively sharp-pointed, which means that changing gear with the gearbox concerned thus becomes easier because less gearchange force is required. However, a disadvantage of such a synchronising mechanism provided with a reaction washer is that the thickness of the material of the washer and the latter's positioning beside the web of the carrier increase the axial thickness of the mechanism.

### Objects of the invention

The primary object of the invention is to provide a new type of structuring system for alternative versions of synchronising devices (for single, double or triple synchronisation) which makes it possible to achieve any of the aforesaid three synchronisation alternatives by using a relatively small number of combinable standard components (articles).

Another substantial object is to provide such a structuring system which leads to a compact design of short overall length of the respective synchronising device and which makes it possible for a "basic gearbox" with synchronising devices of such standardised construction to be in all essentials similar irrespective of whether the gearbox is intended for manual or electronic operation.

A further object is that the assembly (as also disassembly or taking apart) of the constituent parts of the synchronising device should be easier to carry out.

It is also desirable to provide a synchronising device which has gearchange characteristics which make it relatively easy to change gear with the gearbox in which the device is incorporated.

### Summary of the invention

The aforesaid objects are achieved according to the invention by the structuring system of the kind indicated in the introduction exhibiting also the features indicated in the characterising part of claim 1. Variant versions of the synchronisation structuring system according to the invention which are further developed and are preferred to the respective existing synchronisation alternatives may further exhibit the features indicated in dependent claims 2-7.

A primary distinguishing feature of the new structuring system according to the invention is that it is usable for single, double or triple synchronisation versions in that the outer synchronising ring, which is provided with locking teeth and is hereinafter called the "latch cone", has on its radially innermost portion one or more driving protrusions directed radially inwards, each of which is designed for driving engagement within the web portion of the carrier in an engagement aperture which runs through said web portion and is intended for said driving protrusion. In double or triple synchronisation versions, there is also mutual engagement in each of these engagement apertures of an axially directed driving protrusion on the inner synchronising ring with a driving protrusion of the latch cone, whereby the synchronising ring with which the outer synchronising ring (the latch cone) provided with locking teeth is in contact via its conical inner friction surface exhibits on its side facing away from the web portion of the carrier one or more axially directed driving protrusions, each of which engages in a recess in the coupling element of the adjacent gearwheel.

The synchronising rings (the synchronising cones), which are provided with conical friction surfaces and which via their respective driving protrusions directed radially inwards, being in driving engagement with (i.e. being driven by) the carrier in the relating apertures running through the web portion results in an axially very compact "telescoped" arrangement of the synchronising rings whereby the web portion of the carrier is utilised effectively (in a spatially optimum manner) over the whole dimension of its thickness.

In practice, the carrier of a synchronising device in a vehicle gearbox will in general be arranged in the region between two axially separate gearwheels mounted for rotation on the shaft, each of which is provided with a coupling element which is adjacent to the carrier and via which the carrier can be drivingly connected by axial movement of the shift sleeve and during activation of existing synchronising rings. In such cases the number of synchronising rings (cones) may be different on the opposite sides of the carrier, to cater for the magnitude of the synchronising action (friction action to equalise rotation speeds) which has to be applied on the respective sides of the carrier. It is generally the case that if large synchronising powers have to be handled (e.g. for changing to 1 st gear when setting the vehicle in motion), a larger number of cooperating synchronising rings are required (e.g. triple synchronisation) than in situations involving smaller synchronising powers (e.g. changing from 4th to 5th gear, for which single or double synchronisation may suffice), if approximately the same "gearchange feeling" is to be achieved in both situations, which is particularly desirable in the case of manual gearboxes.

A version with two synchronising rings (i.e. single synchronisation) on one side of the carrier, in combination with three synchronising rings (double synchronisation) on the opposite side of the carrier, may exhibit the features indicated in the characterising part of claim 2.

In an alternative version which comprises three synchronising rings on one side of the carrier (double synchronisation) in combination with four synchronising rings on the opposite side of the carrier (i.e. triple synchronisation), the system may exhibit the features indicated in the characterising part of claim 3. In this case the conical inside of the innermost third synchronising ring is applied to a corresponding conical annular flange portion of the adjacent coupling element of the gearwheel, which may either be a flanged element fastened to the particular gearwheel or take the form of an integrated side portion of the same gearwheel.

Particularly for manufacturing technology reasons and to make it possible to use a standardised type of carrier in a gearbox which incorporates two or more carriers with different radial hub/web dimensions, which carriers differ from one another in having different radial distances between the carrier teeth on the radial outer part of the web portion of the carrier and the outside of the gearbox shaft on which the hub portion of the carrier is mounted, it may be advantageous that the hub portion of the carrier be connected to, and for joint rotation with, the shaft via a carrier sleeve which is attached to, and for joint rotation with, the shaft and which has external axial ridges between which the splines of the hub portion, on the latter's inner circumference, engage. In such cases the carrier sleeve serves as an adapter (adapting intermediate element) between the inside of the hub portion of the carrier and the shaft to which the carrier is to be drivingly connected.

To achieve as short an axial overall length as possible of the carrier with its relating synchronising rings on the respective sides of the web portion, it is advantageous that the driving protrusions directed radially inwards of the outer synchronising rings (the latch cones), which are provided with locking teeth, and the axial protrusions on the other synchronising rings engaging with the web portion of the carrier be all situated entirely or almost entirely within the engagement apertures which run through the web portion. The result is maximum utilisation of the web portion, which preferably has a substantially constant web thickness in this engagement region.

At the beginning of a synchronisation process, the shift sleeve moves axially towards the gearwheel which is to be engaged, i.e. axially inwards over and partly past the adjacent axially adjoining outer synchronising ring (the latch cone). In this case there is between this synchronising ring provided with locking teeth and said radially outer part of the web portion a suitable presynchronising element, preferably in the form of an annular wire spring, which the ridgelike coupling teeth on the inside of the shift sleeve push into contact with a radially protruding actuating portion of the synchronising ring, which portion is provided with locking teeth. This wire spring element is fitted in the region immediately within "undercut" end portions of the external carrier teeth of the carrier web portion.

It is easy to fit the wire spring element in the region within the undercut carrier tooth ends of the carrier, which securely hold the wire spring element in its fitted position even when the shift sleeve has moved to its gear engagement position on the axially opposite side of the carrier. The wire spring element and the shift sleeve need not be turned to any particular spring fitting position to enable the wire spring element to be fitted.

It is generally the case that the force applying the outermost synchronising ring (the latch cone) to one or more synchronising rings situated within it can be set by selecting a wire spring element with dimensions such as to provide appropriate preloading force and appropriate contact angles relative to the shift sleeve and the latch cone.

### Brief description of the drawings

The invention will now be described and explained further below with reference to the attached drawings depicting embodiments of synchronising devices (and parts thereof) constructed by a structuring system according to the invention.

The drawings are as follows:
- Fig. 1: depicts an axial longitudinal section through a first synchronising device constructed by a structuring system according to the invention;
- Fig. 2: depicts a schematic partial view, "exploded" in the plane, of some of the coupling and locking teeth which form part of the synchronising device according to Fig. 1;
- Fig. 3: depicts in a view corresponding to Fig. 1 an axial longitudinal section through a second synchronising device constructed according to the invention;
- Fig. 4: depicts in the same view as Fig. 2 the coupling and locking teeth which form part of the synchronising device according to Fig. 3;
- Figs. 5A-13A: depict successive steps in a synchronisation process for a third synchronising device constructed according to invention, as viewed in axial longitudinal section;
- Figs. 5B-13B: depict in the same kind of view as Figs. 2 and 4 the mutual positions of the coupling and locking teeth which form part of the synchronising device according to Figs. 5A - 13A;
- Fig. 14: depicts the carrier;
- Figs. 15 and 16: clutch discs;
- Figs. 17 and 18: latch cones;
- Figs. 19 and 20: inner synchronising rings;
- Fig. 21: the shift sleeve;
- Figs. 22 and 23: intermediate synchronising rings; and
- Fig. 24: a wire spring element for the synchronising devices depicted in Figs. 1 and 3 respectively;
- Figs. 25-26: depict examples of how two different synchronising devices can be fitted on a shaft in a gearbox; and
- Figs. 27-29: depict finally an alternative version of the driving connection between a latch cone and an inner cone.

### Description of preferred embodiments

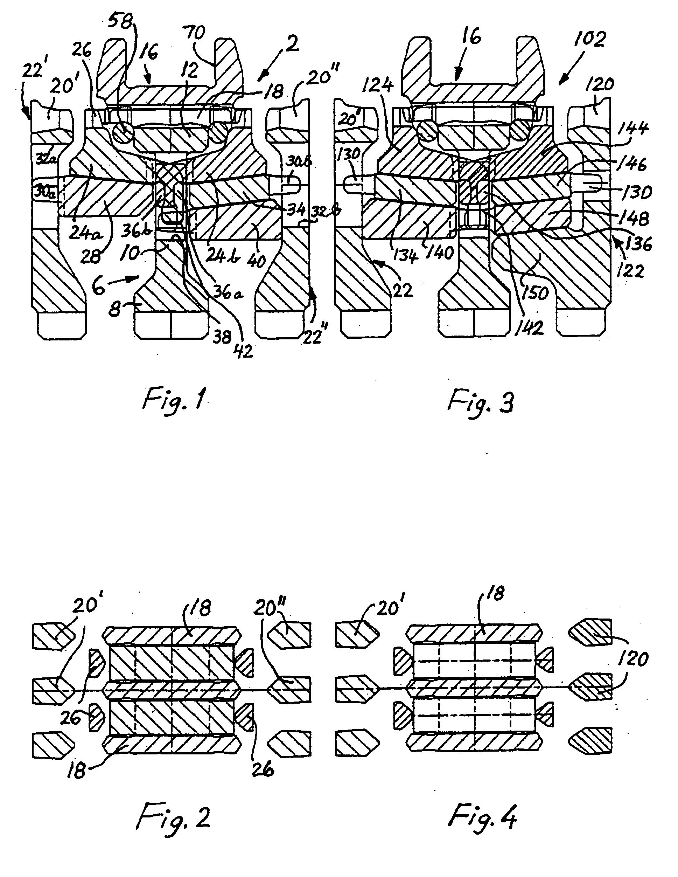

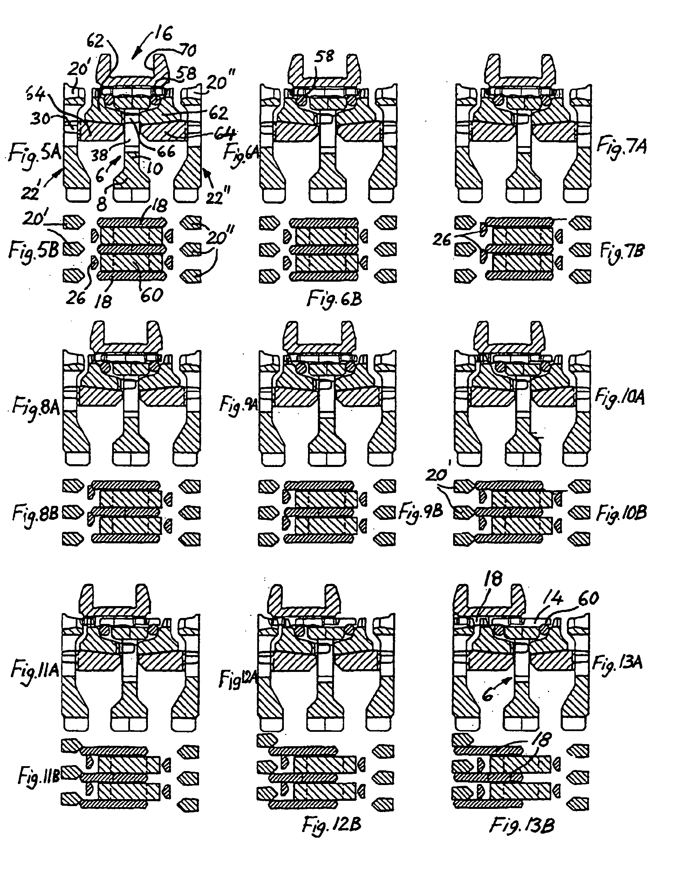

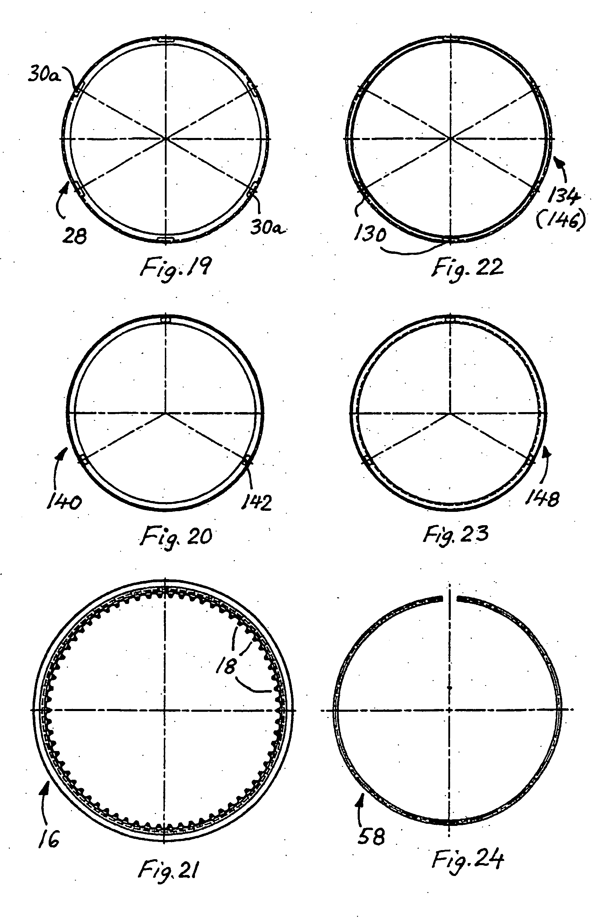

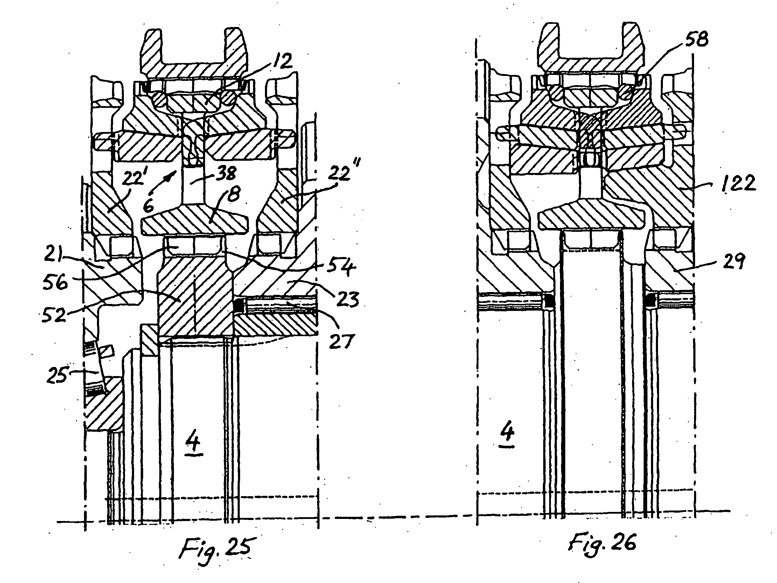

Fig. 1 depicts a first synchronising device 2 constructed by the structuring system according to invention and incorporating a carrier 6 which can be fitted to, and for joint rotation with, a rotatable gearbox shaft 4 and which comprises not only a hub portion 8 connectable to the shaft 4 (only depicted in Figs. 25-26) but also a web portion 10 protruding radially from said hub portion 8. On the outer circumference of the web portion, the carrier 6 has an outer part 12 which is broadened axially to the sides and which is provided on the outside with axial carrier teeth 14 (see Fig. 13A). On the outside of this outer part 12, the carrier supports a shift sleeve 16 (see Fig. 21) which is mounted for joint rotation with, but is movable axially relative to, the carrier and which surrounds the carrier in an annular manner. The shift sleeve is provided internally with axial ridgelike coupling teeth 18 which engage in the intermediate spaces between the carrier teeth 14. By axial movement of the shift sleeve 16, the carrier can, after activation of a number of cooperating synchronising rings situated within the carrier teeth 14, be coupled to external coupling teeth 20' and 20" respectively on coupling elements 22' and 22" fastened respectively to the sides of gearwheels 21 and 23 respectively (only depicted in Figs. 25-26) which are mounted for rotation on the shaft 4 (via bearings 25, 27).

In the synchronising device 2 according to Fig. 1, the synchronising rings on the left side (the single synchronisation side) of the carrier 6 comprise an outer synchronising ring (latch cone) 24a with external locking teeth 26, and, situated within it, an inner synchronising ring 28 with three circumferentially separate axial driving protrusions 30a, each of which engages in its respective recess 32a in the adjacent coupling element 22'.

On the right side (the double synchronisation side) of the carrier 6, the synchronising rings comprise an outer synchronising ring (latch cone) 24b, and an intermediate synchronising ring (intermediate cone) 34 (see Fig. 22) with three axial driving protrusions 30b, each of which engages in its respective recess 32b in the adjoining coupling element 22". The latch cones 24a and 24b each have three circumferentially separate driving protrusions 36a and 36b respectively directed inwards at their radially innermost portion, and each such driving protrusion is designed for driving engagement with the web portion 10 of the carrier 6 in an engagement aperture 38 running through the web portion.

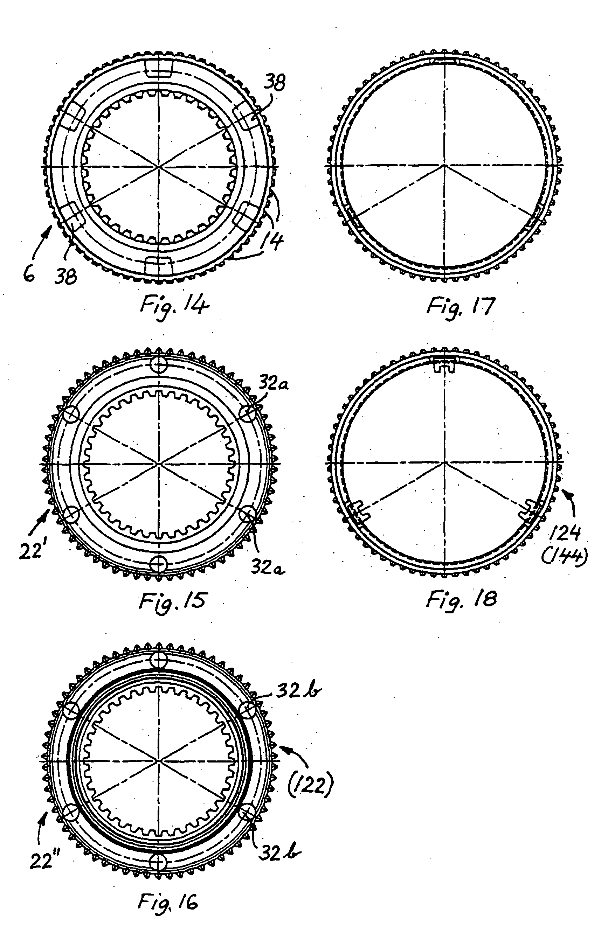

The carrier 6 thus has (see Fig. 14) six such apertures 38, three of which are used by the protrusions 36a and the other three by the protrusions 36b. Radially within the intermediate cone 34 there is an inner synchronising ring (inner cone) 40 with three circumferentially separate axial driving protrusions 42 (see Fig. 1 and Fig. 20) which engage with the driving protrusions 36b of the latch cone 24b.

In the synchronising device 102 depicted in Fig. 3, the synchronising rings on the left side (the double synchronisation side) of the carrier 6 are in principle of the same design as the synchronising rings on the right side of the device 2 (Fig. 1), so the same reference numbers, but increased by the value 100, are used for corresponding parts in Fig. 3; in other words, 124, 134, 140 for the cones and 136, 130, 142 for the driving protrusions. On the right side (the triple synchronisation side) the latch cone is denoted by ref. 144, while a pair of intermediate synchronising rings (intermediate cones) are respectively denoted by refs. 146 and 148. The innermost intermediate cone 148 has three driving protrusions 142 protruding inwards in axial engagement with the driving protrusions 144 of the latch cone. The conical inside of the intermediate cone 148 thus abuts against the conical outside of a cooperating annular flange portion 150 situated inside a coupling element 122 (see Fig. 16) which is firmly joined to a gearwheel 29 which is supported for rotation on the shaft 4 (see Fig. 26).

In the synchronising devices according to Fig. 1 and Fig. 3, the hub portion 8 of the carrier 6 is connected to, and for joint rotation with, the shaft 4 (see in particular Figs. 25-26) via a carrier sleeve 52 which is attached to, and for joint rotation with, the shaft and which has external axial ridges 54 between which the splines 56 of the hub portion engage. The driving protrusions 36a, 36b and 136a, 136b respectively of the latch cones 24a, 24b and 124, 144 respectively, which protrusions are directed substantially radially inwards and are situated in the region of the central plane (perpendicular to the shaft 4) of the web portion 10, are situated entirely within the engagement apertures 38. On the opposite sides of the carrier 6, presynchronising spring elements in the form of annular wire springs 58 (see Fig. 24), the ends of which are situated close together in the circumferential direction, are arranged between the radial outer part 12 of the web portion 10 and the adjacent latch cones 24a, 24b and 124, 144 respectively. These wire springs 58 are fitted in the region directly within undercut end portions 60 (see Fig. 13A) of the carrier teeth 14 on the broadened outer part 12 of the web portion 10 of the carrier 6.

The positioning of the recesses 32a and 32b in the disc-shaped coupling elements 22' and 22" respectively is illustrated in Fig. 15 and Fig. 16, and a latch cone corresponding to the latch cones 24b, 124 and 144 is depicted in Fig. 18. The intermediate cones 34, 134, 146 and 148 are depicted in Fig. 22 and Fig. 23 respectively.

The successive steps of a synchronisation process in a synchronising device will now be described (see Figs. 5-13) summarily with reference to a version which is distinguished by single synchronisation on both sides of the carrier 6. In this version the synchronising device comprises, as illustrated, two uniform latch cones 62 cooperating with two likewise uniform inner cones 64 (see Fig. 5A), these latter being of the same type as the inner synchronising ring (the inner cone) 28 in the version according to Fig. 1. In this case the latch cones 62 (see Fig. 5) have three axially directed driving protrusions 66 which respectively engage from the opposite direction in three of the six engagement apertures 38 running through the carrier 6 (see Fig. 14).

For the sake of simplicity, reference notations for the parts/components of primary relevance in the context appear only in Figs. 5A and 5B, since they are the same parts/components as in the diagrams depicting the other successive steps of the synchronisation process (Fig. 6 - Fig. 13).

In the synchronisation process illustrated in Fig. 5 - Fig. 13, axial movement of the synchronising sleeve (the shift sleeve) 16 is effected conventionally by means of a here undepicted gearchange fork which engages in the circumferential groove 70 and which is operated via intermediate connecting parts by means of a gear lever or gear selector by the driver of the vehicle in which the relevant gearbox with the depicted synchronising device forms part of the driveline. Fig. 5 (comprising Fig. 5A and 5B) depicts the synchronising device in its neutral position.

Now when the gearwheel firmly connected to the disc-shaped coupling element 22' is to be coupled (drivingly connected) to the gearbox shaft 4 to which the carrier 6 is attached for joint rotation with said shaft, the shift sleeve is moved leftwards from the neutral position in Fig. 5 to the application position depicted in Fig. 6 whereby the corrugated undersides of the coupling teeth 18 press the wire spring 58 serving as a presynchronising element into contact with the latch cone 62, the internal conical friction surface of which is thus brought into frictional contact with the conical outside of the inner cone 64. The latch cone 62 then rotates relative to the carrier 6 to the latching position depicted in Fig. 7 whereby the locking teeth 26 prevent further leftward axial movement of the shift sleeve. During the continuing synchronisation depicted in Fig. 8, the friction between the latch cone 62 and the inner cone 64 effects further synchronising action resulting in the clockwise rotation depicted in Fig. 9 when the locking teeth 26 no longer prevent further axial movement of the shift sleeve to the scraping position depicted in Fig. 10 in which further axial movement of the coupling teeth of the shift sleeve is prevented instead by the fact that they are now axially central relative to the coupling teeth 20' of the coupling element 22'.

The synchronisation process is thereafter completed by the successive inward rotation depicted in Fig. 11 and Fig. 12 of the coupling element 22' relative to the shift sleeve 16, which inward rotation ends when the coupling teeth 18 of the shift sleeve reach a position at which they can move past the ends of the coupling teeth 20' into the intermediate space between the latter, to the final coupled position depicted in Fig. 13. In this situation the gearwheel is joined to the coupling element 22' via the coupling teeth 20' of the element 22', the shift sleeve 16 coupled with these teeth, and the carrier 6 drivingly connected to, and for joint rotation with, the shaft on which the carrier is arranged for joint rotation with said shaft.

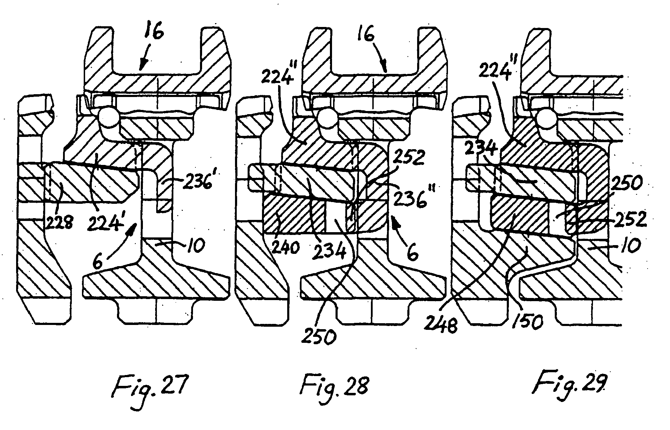

Figs. 27-29 depict finally, for the sake of simplicity, in a version with synchronisation depicted on only one side, how the driving protrusions 236' and 236" respectively of the latch cones 224' and 224" respectively may be designed for single, double and triple synchronisation (see Fig. 27, Fig. 28 and Fig. 29 respectively). As indicated by Figs. 28-29, the inner cones 240 and 248 respectively are in this case provided with recesses 250 on the side edges which face the carrier 6, in which recesses axially directed bent end portions 252 of the driving protrusions 236', 236" of the latch cones 224', 224" engage for direct coupling together of the inner cone and the latch cone, without power transmission via the carrier. The number of driving protrusions may advantageously be three, five and seven for single, double and triple synchronisation, while the number of engagement apertures 38 running through the web portion 10 of the carrier 6 amounts to twelve.

## Claims

1. A structuring system for synchronising devices for a gearbox, preferably a vehicle gearbox, whereby the synchronising device incorporates a carrier which is mounted on, and for joint rotation with, a rotatable shaft (4) and which has a hub portion (8) connected to the shaft and a web portion (10) protruding radially from the hub portion, the outer circumference of which carrier supports for joint rotation with it but axial mobility relative to it a shift sleeve (16) surrounding the carrier in an annular manner whereby the carrier can be coupled to a coupling element (22',22") which is joined to a gearwheel mounted rotatably on a shaft, at least one inner synchronising ring (28,40; 140) with a conical outer friction surface, and an outer synchronising ring (24a,24b;124,144) with a conical inner friction surface and external locking teeth (26) on the outer circumference of the ring, and, in double or triple synchronisation versions, a synchronising ring (34;146,148) which is intermediate between the inner and outer synchronising rings respectively and which has both inner and outer conical friction surfaces, **characterised in that** the structuring system is usable for single, double or triple synchronisation versions, and the outer synchronising ring (24a,24b;124,144) provided with locking teeth (26) has on its radially innermost portion driving protrusions (36a,36b;66) which engage at least halfway in the web portion of the carrier, whereby each driving protrusion is designed for driving engagement with the web portion (10) of the carrier in an engagement aperture (38) running through said web portion for the respective driving protrusion, that each protrusion of the outer synchronising ring (the latch cone) also has engaging with it, in double or triple synchronisation versions, an axially directed driving protrusion (42) on the inner synchronising ring, and that the synchronising ring (28,34;134,146) with which the conical inner friction surface of the outer synchronising ring provided with locking teeth (26) is in contact has on its side facing away from the web portion of the carrier one or more axially directed driving protrusions (30a,30b;130), each of which engages in a recess in the coupling element (22; 122) of the adjacent gearwheel.

2. A system for synchronising devices according to claim 1, whereby the carrier (6) is arranged in the region between two axially separate gearwheels mounted rotatably on the shaft, each of which is provided with a coupling element (22',22") adjacent to the carrier, whereby the carrier can be drivingly connected by axial movement of the shift sleeve (16) and activation of existing synchronising rings, **characterised in that** on one side of the carrier (6) an outer synchronising ring (24a) provided with locking teeth is in contact with an inner synchronising ring (28) which has at least one axial driving protrusion (30a) which engages in a recess (32a) in the coupling element (22') of the adjacent gearwheel, and on the opposite other side of the carrier another outer synchronising ring (24b) is in contact with an intermediate synchronising ring (34) which is conical on both sides and which by at least one axial protrusion (30b) engages in a recess in the coupling element (22") of the adjacent gearwheel and which abuts internally against an inner synchronising ring (40) provided with an axial protrusion (42) which is in engagement with the protrusion of the latch cone in one of the engagement apertures (38) in the web portion of the carrier.

3. A system for synchronising devices according to claim 1, whereby the carrier (6) is arranged in the region between two axially separate gearwheels mounted rotatably on the shaft, each of which is provided with a coupling element (22;122) adjacent to the carrier whereby the carrier can be connected drivingly by axial movement of the shift sleeve (16) and activation of existing synchronising rings, **characterised in that** on one side of the carrier an outer synchronising ring (124) provided with locking teeth is in contact with an intermediate synchronising ring (134) which is conical on both sides and which via at least one axial protrusion (130) engages in a recess in the coupling element of the adjacent gearwheel and abuts internally against an inner synchronising ring (140) provided with an axial protrusion (42) which is in engagement within one of the engagement apertures (38) in the web portion of the carrier, and on the opposite other side of the carrier another outer synchronising ring (144) is in contact with an intermediate synchronising ring (146) which is conical on both sides and which via at least one axial protrusion (130) engages in a recess in the coupling element (122) of the adjacent gearwheel and abuts internally against an innermost synchronising ring (148) which is conical on both sides and which has at least one axial protrusion (142) which in one of the engagement apertures (38) engages with the protrusion of the latch cone (144), and that the conical inside of the last-named innermost synchronising ring (148) abuts against the surface of a cooperating conical annular flange portion (150) of the coupling element of the adjacent gearwheel.

4. A system according to any one of the foregoing claims, **characterised in that** the hub portion (8) of the carrier is connected to, and for joint rotation with, the shaft (4) via a carrier sleeve (52) which is attached to, and for joint rotation with, the shaft and which has external axial ridges between which splines (56) on the inner circumference of the hub portion engage.

5. A system according to any one of the foregoing claims, **characterised in that** the driving protrusions (36a,36b) of the one or more outer synchronising rings (the latch cones) provided with locking teeth (26), which protrusions are preferably directed radially inwards and situated in the region of the centre of the web portion, and the axial protrusions (42;142) on the other synchronising rings engaging with the protrusions of the respective latch cones, are all situated within the engagement apertures (38) running through the web portion, which is provided with substantially constant web thickness in this region.

6. A system according to any one of the foregoing claims, **characterised in that** on each side of the carrier an annular presynchronising spring element (58) fitted in the region directly within undercut end portions (60) of the carrier teeth is arranged between a radial outer part (12), provided with external carrier teeth (14), of the web portion (10) and the respective adjacent outer synchronising ring.

7. A system according to claim 6, **characterised in that** the presynchronising spring element takes the form of a wire spring (58).

## Patentansprüche

1. Anordnung für Synchronisierungseinrichtungen für ein Getriebe, vorzugsweise ein Fahrzeuggetriebe, wobei die Synchronisierungseinrichtung umfasst:
einen Träger, welcher an und für eine gemeinsame Drehung mit einer drehbaren Welle (4) verbunden ist und welcher einen Nabenbereich (8) aufweist, der mit der Welle verbunden ist, und einen Stegabschnitt (10), der radial von dem Nabenbereich vorsteht, wobei der Außenumfang davon den Träger für eine gemeinsame Drehung mit diesem aber ohne axiale Beweglichkeit bezüglich diesem lagert,
eine Schaltmuffe (16), die den Träger ringartig umgibt, wobei der Träger mit einem Kupplungselement (22', 22") koppelbar ist, welches mit einem Zahnrad, das drehbar an einer Welle montiert ist, verbunden ist,
mindestens einen inneren Synchronisierungsring (28, 40, 140) mit einer konischen äußeren Reibfläche, und
einen äußeren Synchronisierungsring (24a, 24b; 124, 144) mit einer konischen inneren Reibfläche und Außensperrzähnen (26) an dem äußeren Umfang des Rings, und,
in zweifachen oder dreifachen Synchronisierungsausführungen, einen Synchronisierungsring (34; 146,148), welcher jeweils zwischen den inneren und den äußeren Synchronisierungsringen liegt und welcher sowohl innere als auch äußere konische Reibflächen aufweist,
**dadurch gekennzeichnet,**
**dass** die Anordnung für einfache, zweifache oder dreifache Synchronisierungsausführungen verwendbar ist, und der äußere mit Sperrzähnen (26) versehene Synchronisierungsring (24a, 24b; 124, 144) an seinem radial innersten Bereich Antriebsvorsprünge (36a, 36b; 66) aufweist, welche mindestens zur Hälfte in den Stegabschnitt des Trägers eingreifen, wobei jeder Antriebsvorsprung für einen Antriebseingriff mit dem Stegabschnitt (10) des Trägers in einer Eingriffsöffnung (38) ausgebildet ist, die durch den Stegabschnitt für den jeweiligen Antriebsvorsprung verläuft, dass jeder Vorsprung des äußeren Synchronisierungsrings (der Sperrinnenring) ebenfalls damit eingreifend, in zweifachen oder dreifachen Synchronisierungsausführungen, einen axial ausgerichteten Antriebsvorsprung (42) an dem inneren Synchronisierungsring aufweist, und dass der Synchronisierungsring (28, 34; 134, 146) mit welchem die konische innere Reibfläche von dem äußeren Synchronisierungsring, der mit Sperrzähnen (26) ausgebildet ist, in Verbindung steht, an seiner Seite, die dem Stegabschnitt des Trägers abgewandt ist, einen oder mehrere axial ausgerichtete Antriebsvorsprünge (30a, 30b; 130) aufweist, von welchen jeder in eine Ausnehmung in dem Kupplungselement (22; 122) des angrenzenden Zahnrads greift.

2. Anordnung für Synchronisierungseinrichtungen nach Anspruch 1, wobei der Träger (6) im Bereich zwischen zwei axial getrennten Zahnrädern, die drehbar an einer Welle montiert sind, angeordnet ist, von welchen jedes mit einem Kupplungselement (22', 22'') benachbart zu dem Träger versehen ist, wobei der Träger durch eine axiale Bewegung der Schaltmuffe (16) und Betätigung der vorhandenen Synchronisierungsringe antreibend koppelbar ist,
**dadurch gekennzeichnet, dass** auf einer Seite des Trägers (6) ein äußerer Synchronisierungsring (24a), der mit Sperrzähnen versehen ist, mit einem inneren Synchronisierungsring (28) in Kontakt steht, welcher mindestens einen axialen Antriebsvorsprung (30a) hat, der in eine Ausnehmung (32a) in dem Kupplungselement (22') des angrenzenden Zahnrads eingreift, und auf der entgegengesetzten anderen Seite von dem Träger ein weiterer äußerer Synchronisierungsring (24b) in Kontakt mit einem dazwischen liegenden Synchronisierungsring (34) steht, welcher an beiden Seiten konisch ist und welcher mit mindestens einem axialen Vorsprung (30b) in eine Ausnehmung in dem Kupplungselement (22") des angrenzenden Zahnrads eingreift und welcher innen mit einem inneren Synchronisierungsring (40), der mit einem axialem Vorsprung (42) versehen ist, welcher in Eingriff mit dem Vorsprung des Sperrinnenrings in einer der Eingriffsöffnungen (38) steht, im Stegabschnitt des Trägers in Eingriff steht.

3. Anordnung für Synchronisierungseinrichtungen nach Anspruch 1, wobei der Träger (6) im Bereich zwischen zwei axial getrennten Zahnrädern, die drehbar an einer Welle montiert sind, angeordnet ist, von welchen jedes mit einem zu dem Träger benachbarten Kupplungselement (22, 122) versehen ist, wobei der Träger antreibend verbunden werden kann durch die axiale Bewegung der Schaltmuffe (16) und Betätigung der vorhandenen Synchronisierungsringe,
**dadurch gekennzeichnet, dass** auf einer Seite des Trägers ein äußerer Synchronisierungsring (124), der mit Sperrzähnen versehen ist, mit einem dazwischen liegenden Synchronisierungsring (134) in Kontakt steht, welcher auf beiden Seiten konisch ist und welcher durch mindestens einen axialen Vorsprung (130) in eine Ausnehmung in dem Kupplungselement des angrenzenden Zahnrads eingreift und innen an einem inneren Synchronisierungsring (140) anliegt, der mit einem axialen Vorsprung (42) versehen ist, welcher in Eingriff innerhalb einer der Eingriffsöffnungen (38) im Stegabschnitt des Trägers ist, und auf der entgegengesetzten anderen Seite von dem Träger ein weiterer äußerer Synchronisierungsring (144) in Kontakt mit einem dazwischen liegenden Synchronisierungsring (146) steht, welcher an beiden Seiten konisch ist und welcher durch mindestens einen axialen Vorsprung (130) in eine Ausnehmung im dem Kupplungselement (122) des angrenzenden Zahnrads eingreift und innen an einem innersten Synchronisierungsring (148) anliegt, welcher auf beiden Seiten konisch ist und welcher mindestens einen axialen Vorsprung (142) hat, der in einer der Eingriffsöffnungen (38) mit dem Vorsprung des Sperrinnenring (144) in Eingriff steht, und dass die konische Innenseite des zuletzt genannten innersten Synchronisierungsrings (148) an der Oberfläche eines zusammenwirkenden konischen ringförmigen Flanschbereichs (150) des Kupplungselements des angrenzenden Zahnrads angrenzt.

4. Anordnung nach einem der vorangehenden Ansprüche,
**dadurch gekennzeichnet, dass** der Nabenbereich (8) des Trägers mit und für eine gemeinsame Drehung mit der Welle (4) durch eine Trägermuffe (52) verbunden ist, welche an und für eine gemeinsame Drehung mit der Welle befestigt ist und welche äußere axiale Rippen aufweist, zwischen denen Zahnkeile (56) an dem inneren Umfang des Nabenbereichs eingreifen.

5. Anordnung nach einem der vorangehenden Ansprüche,
**dadurch gekennzeichnet, dass** die Antriebsvorsprünge (36a, 36b) des einen oder mehrerer äußerer Synchronisierungsringe (die Sperrinnenringe), die mit Sperrzähnen versehen sind, welche Vorsprünge vorzugsweise radial einwärts gerichtet und im Bereich der Mitte des Stegabschnitts gelegen sind, und die axialen Vorsprünge (42,; 142) an den anderen Synchronisierungsringen, die in die Vorsprünge der entsprechenden Sperrinnenringe eingreifen, alle innerhalb der Eingriffsöffnungen (38) angeordnet sind, die durch den Stegabschnitt verlaufen, welcher in diesem Bereich mit im wesentlichen konstanter Stegdicke ausgestaltet ist.

6. Anordnung nach einem der vorangehenden Ansprüche,
**dadurch gekennzeichnet, dass** auf jeder Seite des Trägers ein ringförmiges Vorsynchronisierungs-Federelement (58), das im Bereich unmittelbar innerhalb hinterschnittener Endbereiche (60) der Trägerzähne eingepasst ist, zwischen einem radial äußeren Teil (12) des Stegabschnitts (10), der mit äußeren Trägerzähnen (14) versehen ist, und dem entsprechenden benachbarten äußeren Synchronisierungsring angeordnet ist.

7. Anordnung nach Anspruch 6,
**dadurch gekennzeichnet, dass** das Vorsynchronisierungs-Federelement als Drahtfeder (58) ausgestaltet ist.

## Revendications

1. Système de structuration destiné à des dispositifs de synchronisation pour une boîte de vitesses, de préférence une boîte de vitesses de véhicule, moyennant quoi le dispositif de synchronisation comporte un support monté sur un arbre rotatif (4) et afin d'être en rotation avec celui-ci et présentant une partie de moyeu (8) raccordée à l'arbre et une partie d'âme (10) faisant radialement saillie depuis la partie de moyeu, la circonférence extérieure dudit support soutenant, pour effectuer une rotation avec celui-ci mais de manière axialement mobile par rapport à celui-ci, un manchon de changement de vitesse (16) entourant le support de manière annulaire, moyennant quoi le support peut être couplé à un élément de couplage (22', 22") raccordé à une roue dentée montée de manière rotative sur un arbre, au moins un anneau de synchronisation intérieur (28, 40 ; 140) présentant une surface de frottement extérieure conique, et un anneau de synchronisation extérieur (24a, 24b ; 124, 144) présentant une surface de frottement intérieure conique et des dents de verrouillage extérieures (26) sur la circonférence extérieure de l'anneau, et, en double ou triple versions de synchronisation, un anneau de synchronisation (34 ; 146, 148) intermédiaire entre les anneaux de synchronisation intérieur et extérieur respectivement et présentant des surfaces de frottement coniques intérieure et extérieure, **caractérisé en ce que** le système de structuration peut être utilisé pour des versions de synchronisation simple, double ou triple, et **en ce que** l'anneau de synchronisation extérieur (24a, 24b ; 124, 144) muni de dents de verrouillage (26) présente sur sa partie radialement la plus intérieure des saillies d'entraînement (36a, 36b ; 66) qui viennent en prise au moins à mi-distance dans la partie d'âme du support, moyennant quoi chaque saillie d'entraînement est conçue pour une mise en prise d'entraînement avec la partie d'âme (10) du support dans une ouverture de mise en prise (38) s'étendant à travers ladite partie d'âme pour la saillie d'entraînement respective, **en ce que** chaque saillie de l'anneau de synchronisation extérieur (cône de fixation) est également en prise avec une saillie d'entraînement dirigée axialement (42), en double ou triple versions de synchronisation, sur l'anneau de synchronisation intérieur, et **en ce que** l'anneau de synchronisation (28, 34 ; 134, 146) avec lequel la surface de frottement intérieure conique de l'anneau de synchronisation extérieur muni de dents de verrouillage (26) est en contact présente sur sa face latérale opposée à la partie d'âme du support une ou plusieurs saillies d'entraînement dirigées axialement (30a, 30b ; 130), dont chacune vient en prise avec un évidement dans l'élément de couplage (22 ; 122) de la roue dentée adjacente.

2. Système pour dispositifs de synchronisation selon la revendication 1, dans lequel le support (6) est agencé dans la région située entre deux roues dentées séparées axialement montées de manière rotative sur l'arbre, dont chacune est munie d'un élément de couplage (22', 22") adjacent au support, moyennant quoi le support peut être relié par entraînement par le mouvement axial du manchon de changement de vitesse (16) et l'activation des anneaux de synchronisation existants, **caractérisé en ce que** sur un côté du support (6) un anneau de synchronisation extérieur (24a) muni de dents de verrouillage est en contact avec un anneau de synchronisation intérieur (28) présentant au moins une saillie d'entraînement axiale (30a) venant en prise avec un évidement (32a) dans l'élément de couplage (22') de la roue dentée adjacente, et sur l'autre côté opposé du support un autre anneau de synchronisation extérieur (24b) est en contact avec un anneau de synchronisation intermédiaire (34) conique des deux côtés et venant en prise au moins par une saillie axiale (30b) avec un évidement dans l'élément de couplage (22") de la roue dentée adjacente et qui est abouté de manière interne contre un anneau de synchronisation intérieur (40) muni d'une saillie axiale (42) qui vient en prise avec la saillie du cône de fixation dans une des ouvertures de mise en prise (38) dans la partie d'âme du support.

3. Système pour dispositifs de synchronisation selon la revendication 1, dans lequel le support (6) est agencé dans la région située entre deux roues dentées séparées axialement montées de manière rotative sur l'arbre, dont chacune est munie d'un élément de couplage (22 ; 122) adjacent au support, moyennant quoi le support peut être relié par entraînement par le mouvement axial du manchon de changement de vitesse (16) et l'activation des anneaux de synchronisation existants, **caractérisé en ce que** sur un côté du support un anneau de synchronisation extérieur (124) muni de dents de verrouillage est en contact avec un anneau de synchronisation intermédiaire (134) conique des deux côtés et venant en prise au moins par une saillie axiale (130) avec un évidement dans l'élément de couplage de la roue dentée adjacente et qui est abouté de manière interne contre un anneau de synchronisation intérieur (140) muni d'une saillie axiale (42) qui vient en prise dans une des ouvertures de mise en prise (38) dans la partie d'âme du support, et sur l'autre côté opposé du support un autre anneau de synchronisation extérieur (144) est en contact avec un anneau de synchronisation intermédiaire (146) conique des deux côtés et venant en prise au moins par une saillie axiale (130) avec un évidement dans l'élément de couplage (122) de la roue dentée adjacente et qui est abouté de manière interne contre un anneau de synchronisation le plus à intérieur (148) conique des deux côtés et muni d'au moins une saillie axiale (142) qui dans une des ouvertures de mise en prise (38) vient en prise avec la saillie du cône de fixation (144), et **en ce que** l'intérieur conique de l'anneau de synchronisation le plus intérieur (148) susmentionné est abouté contre la surface d'une partie de bride annulaire conique coopérante (150) de l'élément de couplage de la roue dentée adjacente.

4. Système selon l'une quelconque des revendications précédentes, **caractérisé en ce que** la partie de moyeu (8) du support est raccordée à l'arbre (4), et afin d'être en rotation avec celui-ci, via un manchon de support (52) fixé à l'arbre, et afin d'être en rotation avec celui-ci, et présentant des stries axiales extérieures entre lesquelles des cannelures (56) présentes sur la circonférence intérieure de la partie de moyeu viennent en prise.

5. Système selon l'une quelconque des revendications précédentes, **caractérisé en ce que** les saillies d'entraînement (36a, 36b) des un ou plusieurs anneaux de synchronisation extérieurs (les cônes de fixation) munis de dents de verrouillage (26), lesquelles saillies sont de préférence dirigées radialement vers l'intérieur et situées dans la région du centre de la partie d'âme, et les saillies axiales (42 ; 142) sur les autres anneaux de synchronisation venant en prise avec les saillies des cônes de fixation respectifs, sont toutes situées dans les ouvertures de mise en prise (38) s'étendant à travers la partie d'âme, qui présente une épaisseur d'âme sensiblement constante dans cette région.

6. Système selon l'une quelconque des revendications précédentes, **caractérisé en ce que** de chaque côté du support un élément de ressort de pré-synchronisation annulaire (58) installé dans la région située directement dans des parties d'extrémité de dégagement (60) des dents de support est agencé entre une partie extérieure radiale (12), munie de dents de support extérieures (14), de la partie de d'âme (10) et l'anneau de synchronisation extérieur adjacent respectif.

7. Système selon la revendication 6, **caractérisé en ce que** l'élément de ressort de pré-synchronisation revêt la forme d'un ressort en fil métallique (58).
